# EUROPEAN PATENT APPLICATION

(11) **EP 4 756 339 A1**
(43) Date of publication of application: **10.06.2026**
(21) Application number: 24852183.3
(22) Date of filing: 30.07.2024
(51) Int. Cl.: F25D 23/06, F16L 59/02, F16L 59/065

(54) **INSULATOR**

(30) Priority: 04.08.2023 KR 20230102480
(71) Applicant: LG Electronics Inc., Yeongdeungpo-gu Seoul 07336 (KR)
(72) Inventor: JUNG, Wonyeong, Seoul 08592 (KR); YOUN, Deokhyun, Seoul 08592 (KR); KIM, Bongjin, Seoul 08592 (KR)
(74) Representative: Ter Meer Steinmeister & Partner
(86) International application number: PCT/KR2024/011181
(87) International publication number: WO 2025/033829

(57) **Abstract**

The present invention comprises: a first plate; a second plate; a vacuum space provided between the first plate and the second plate; and an inner casing provided to cover at least a portion of the first plate, wherein the inner casing includes a portion in which at least a portion thereof is bent and connected to one side of the first plate.

## Description

### [Technical Field]

The present disclosure relates to an insulator.

### [Background Art]

First, there is the applicant's registered patent No. 10-0343719 (Patent Document 1). According to the registered patent, a vacuum insulation panel is manufactured, the vacuum insulation panel is built into a refrigerator wall, and the exterior of the vacuum insulation panel is finished with a separate molded product made of expanded polystyrene (EPS). According to this method, foaming is not required, and the effect of improved insulation performance can be obtained. However, this method includes the problems of increased cost and a more complicated manufacturing process.

As another example, there have been attempts to manufacture a refrigerator wall entirely from a single-piece insulator. For instance, U.S. Published Patent Application US2040226956A1 (Patent Document 2) discloses providing a refrigerator insulation structure in a vacuum state. However, it is difficult to provide the refrigerator wall in a sufficient vacuum state to achieve a practical level of insulation effect. To explain in detail, there are problems such as it is difficult to prevent heat transfer at a contact portion between an outer case and an inner case, which include different temperatures, it is difficult to maintain a stable vacuum state, and it is difficult to prevent deformation of the cases due to the negative pressure of the vacuum state.

In addition, Japanese Published Patent Application JP 2011-247534 (Patent Document 3) discloses an insulated casing that simplifies bonding work and improves productivity when installing and preparing multiple vacuum insulation panels.

Patent Document 3 discloses an insulated casing for a refrigerator, which includes an inner casing and an outer casing and a plurality of vacuum insulation panels provided between them, and forms a plurality of wall sections of the refrigerator main body, wherein the inner casing is formed by combining a plurality of inner casing segments into which the entire inner casing is divided, and at the same time, the plurality of vacuum insulation panels are formed to correspond in shape to the respective inner casing segments, and each of these vacuum insulation panels and each of these inner casing segments are installed, respectively.

Conventional insulators include the problem that their surfaces become uneven due to the vacuum pressure applied to the vacuum space (so-called "irregularities"). As a result, deformation of the insulator may occur, and such deformation can lead to assembly defects when insulators are assembled together. Furthermore, when the irregularities are exposed to the inside of the refrigerator, it may degrade the aesthetic appearance.

The first plate is thinner than the second plate, and when exposed to the inside of the refrigerator, there is a risk of breakage or corrosion.

During the manufacturing process of a vacuum insulation module, the appearance of the first plate may become irregular due to the vacuum pressure, and if exposed to the inside of the refrigerator, the exterior design may not be visually appealing.

Therefore, there is a need to develop a structure that can prevent the insulator from being exposed to the inside of the refrigerator.

### [Prior Art Documents]

### [Patent Documents]

Registered Patent 10-0343719
U.S. Laid-Open Patent Publication No. US20040226956A1
Japanese Patent Laid-Open Publication No. 2011-247534A

### [Disclosure]

### [Technical Problem]

The present disclosure provides a technology related to an insulator.

Optionally or in another embodiment, the present disclosure provides a technology that can alleviate assembly defects of an insulator caused by the problem of surface irregularities due to vacuum pressure.

Optionally or in another embodiment, the present disclosure provides a technology that can minimize deformation caused by vacuum pressure.

Optionally or in another embodiment, the present disclosure provides a technology that can prevent exposure of irregularities on an insulator surface.

### [Technical Solution]

An insulator of the present disclosure may include a casing provided to cover at least a portion of a first plate. The casing may include a portion that is at least partially bent and connected to one side of the first plate.

One surface of the first plate may include a convex portion that is deformed by a vacuum pressure forming the vacuum space and formed to be convex toward the casing. One surface of the casing may include at least one of a connecting portion and a spacing portion. The connecting portion may be connected to the convex portion. The spacing portion may be provided to be spaced apart from a surrounding area of the convex portion on the one surface of the first plate. One surface of the casing may include: a connecting portion connecting to the convex portion; and a spacing portion spaced apart from a surrounding area of the convex portion on the one surface of the first plate.

The spacing portion may be filled with air, between the one surface of the first plate and the one surface of the casing.

The casing may include a first surface and second and third surfaces formed by bending from both sides of the first surface in a direction intersecting the same.

In the insulator of the present disclosure, at least three insulators may be provided to be connected together to face the first to third surfaces, respectively.

A block may be provided on at least one side of the insulator. A block cover covering the block may be provided at least either between the first surface and the second surface or between the first surface and the third surface.

The first surface may include a bent side portion that is formed by bending from at least one side and supported on one side of the second surface. The second surface may include a fixing side portion where the bent side portion is seated to be supportable.

At least two insulators may be provided to be connected in directions intersecting each other. A block may be provided on at least one side of the insulator. A block cover covering the block may be provided on one side of the casing.

A component may be provided on one surface of the insulator, and the casing may be disposed between one surface of the first plate and the component and include a component connector connecting to one side of the component.

At least one component may be provided to be supportable on at least one surface of the first plate, and the casing includes a fixing side portion coupled to the at least one component.

The fixing side portion may be coupled to be inserted between the first plate and the at least one component.

The fixing side portion may include at least one of a first fixing side portion and a second fixing side portion. The fixing side portion may include a first fixing side portion and a second fixing side portion.

The first fixing side portion may be provided on one side and coupled to a first component. The second fixing side portion may be provided on another side spaced apart from the one side and coupled to a second component.

A block may be provided on at least one side of the insulator. The fixing side portion may be disposed such that one side thereof is spaced apart from the block.

The casing may be provided with at least two surfaces which are formed as separate parts.

One surface of the casing formed as a separate part may be provided to be bent on one side. One surface of the casing formed as a separate part may be seated and supported on one side of another surface.

A component may be provided on one surface of the insulator of the present disclosure. The casing may include a portion extending to one side of the component or a portion spaced apart from the one side of the component.

### [Advantageous Effects]

An insulator of the present disclosure can alleviate assembly defects of an insulator caused by surface irregularities due to vacuum pressure.

An insulator of the present disclosure can minimize deformation caused by vacuum pressure.

An insulator of the present disclosure can prevent external exposure of irregularities on an insulator surface.

An insulator of the present disclosure can prevent damage to the insulator surface.

### [Description of Drawings]

FIG. 1 is a perspective view showing the exterior of a refrigerator according to an embodiment of the present disclosure.
FIG. 2 is a conceptual view for explaining a vacuum insulator provided in the refrigerator of FIG. 1.
FIG. 3 is a conceptual view for explaining a third plate provided in the plate of FIG. 2.
FIG. 4 is a conceptual view for explaining a heat transfer resistor provided in the plate of FIG. 3.
FIG. 5 is a perspective view illustrating an example in which a casing is provided inside a plurality of insulators.
FIG. 6a is a perspective view illustrating a casing of a first embodiment of the present disclosure.
FIG. 6b is a side view illustrating the casing of the first embodiment of the present disclosure.
FIG. 6c is a front view illustrating the casing of the first embodiment of the present disclosure.
FIG. 6d is a plan view illustrating the casing of the first embodiment of the present disclosure.
FIG. 7a is a front view of the inside of insulators of the present disclosure, as viewed from the zy plane (cross-section A-A').
FIG. 7b is an enlarged view of portion A of FIG. 7a.
FIG. 7c is an enlarged view of portion B of FIG. 7a.
FIG. 8a is a cross-sectional view of portion B-B' in FIG. 5 (zx plane).
FIG. 8b is an enlarged view of portion C of FIG. 8a.
FIG. 8c is an enlarged view of portion D of FIG. 8a.
FIG. 9 is an exploded perspective view illustrating a casing of a second embodiment inside a plurality of insulators.
FIG. 10a is a cross-sectional view taken along C-C' of FIG. 9.
FIG. 10b is an enlarged view of portion E of FIG. 10a.
FIG. 10c is an enlarged view of portion F of FIG. 10a.
FIG. 11 is a perspective view illustrating an example in which a inner casing of a third embodiment is provided inside a plurality of insulators.
FIG. 12a is a perspective view illustrating the casing of the third embodiment of the disclosure.
FIG. 12b is a side view illustrating the casing of the third embodiment of the present disclosure.
FIG. 12c is a front view illustrating the casing of the third embodiment of the present disclosure.
FIG. 12d is a plan view illustrating the casing of the third embodiment of the present disclosure.

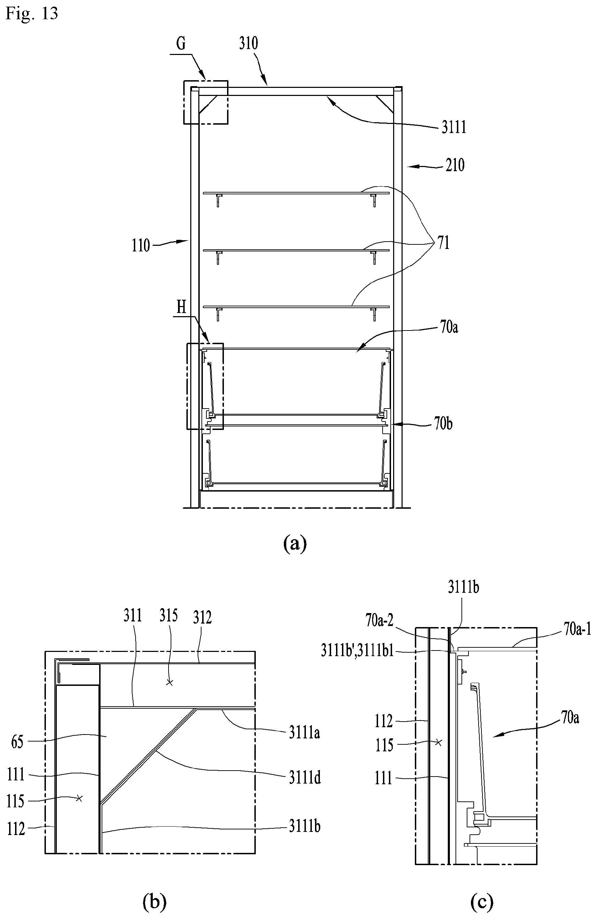

FIG. 13a is a front view of the inside of insulators of the present disclosure, as viewed from the zy plane.
FIG. 13b is an enlarged view of portion G of FIG. 13a.
FIG. 13c is an enlarged view of portion H of FIG. 13a.
FIG. 14a is a cross-sectional view taken along the zx plane of FIG. 11.
FIG. 14b is an enlarged view of portion I of FIG. 14a.
FIG. 14c is an enlarged view of portion J of FIG. 14a.
FIG. 15a is a cross-sectional view taken along the zx plane of a casing of a fourth embodiment of the present disclosure.
FIG. 15b is an enlarged view of portion K of FIG. 15a.
FIG. 15c is an enlarged view of portion L of FIG. 15a.
FIG. 16a is a front view of the inside of insulators of the present disclosure, where a casing of a fifth embodiment is installed, as viewed from the zy plane.
FIG. 16b is an enlarged view of portion M of FIG. 16a.
FIG. 16c is an enlarged view of portion N of FIG. 16a.
FIG. 17 is a front view of the casing of the fifth embodiment of the present disclosure.
FIG. 18 is a perspective view showing an inner surface of the insulator where "irregularities" appear when the casing is absent.
FIG. 19 is a perspective view showing an inner surface of the insulator of FIG. 18 where the casing is provided.
FIG. 20 is a perspective view illustrating an example in which a second surface of a casing of a sixth embodiment is provided on the insulator.
FIG. 21 is a perspective view illustrating an example in which the casing of the sixth embodiment is provided inside the insulators.
FIG. 22 is a perspective view illustrating the casing of the sixth embodiment of the present disclosure.
FIG. 23 is a perspective view illustrating the casing of the fifth embodiment of the present disclosure.
FIG. 24 is a perspective view illustrating an example in which the casing of the fifth embodiment is provided inside the insulators.
FIG. 25 is a conceptual view illustrating an example in which the casing of the fifth embodiment is provided inside the insulators.

### [Mode for Invention]

Hereinafter, a common description which describes portions commonly defined across all embodiments of the present disclosure will be described.

Optionally, an insulator of the present disclosure may be provided as a single insulator. For example, the insulator may include: a first wall extending in one direction; and a second wall extending in a direction different from the one direction. Optionally, the insulator of the present disclosure may include a first insulator and a second insulator. The second insulator may be provided as a separate component distinct from the first insulator. The second insulator may be connected to the first insulator by a connector. In the present disclosure, the connector may be defined as a joint. The second insulator may include a portion extending in the same direction as the first insulator. The second insulator may include a portion extending in a direction different from the first insulator. The second insulator may include a portion connected to the first insulator, or may include a portion disposed to overlap the first insulator in at least one direction. The insulator may be a vacuum insulator including a vacuum space, or a non-vacuum insulator which does not include a vacuum space. The insulator may be a combination of the vacuum insulator and the non-vacuum insulator. The vacuum space provided in the second insulator may include a portion extending in the same direction as the vacuum space provided in the first insulator. The vacuum space provided in the second insulator may include a portion extending in a direction different from the vacuum space provided in the first insulator. The vacuum space provided in the second insulator may include a portion disposed to overlap the vacuum space provided in the first insulator in at least one direction. The insulator may be provided in the form of a panel. In the present disclosure, for example, the following description will be given with respect to a "panel" and an embodiment in which the term "panel" is replaced with the term "insulator" may also be included within the present disclosure. For example, in the present disclosure, the following description assumes that at least two panels of the main body form the exterior of the refrigerator, it may be understood or interpreted that at least two insulators of the main body form the exterior of the refrigerator.

Optionally, the refrigerator of the present disclosure may include a main body. The main body may include at least one storage compartment. The main body may further include a partition wall that separates a first storage compartment and a second storage compartment. A first storage compartment joint may include a first sub compartment joint, a second sub compartment joint, and/or a third sub compartment joint. The second storage compartment joint may be provided on one side of the second storage compartment. The second storage compartment joint may include a first joint, a second joint, and/or a third joint.

The partition wall may include the vacuum insulator and/or the non-vacuum insulator. The refrigerator of the present disclosure may include a door. The refrigerator of the present disclosure may include a machine compartment disposed on one side of the main body. In the machine compartment, one or more of the following may be arranged: a compressor, heat-dissipating components (e.g., a condenser, a heat-dissipating portion of a thermoelectric module, or a heat sink that exchanges heat with the heat-dissipating portion of the thermoelectric module), and a cooling fan. The machine compartment may include at least one of the following: a first cover (e.g., side cover) forming at least a portion of a first surface (e.g., side surface) for the machine compartment, a second cover (e.g., back cover) forming at least a portion of a second surface (e.g., rear surface), a third cover (e.g., upper cover) forming at least a portion of a third surface (e.g., top surface), a fourth cover (e.g., bottom cover) forming at least a portion of a fourth surface (e.g., bottom surface), and a fifth cover (e.g., front cover) forming at least a portion of a fifth surface (e.g., front surface). One or more of the first, second, third, fourth, and fifth covers may be provided as a single component or as multiple components. The machine compartment of the refrigerator of the present disclosure may include the insulator.

The panel may include one or more of a first plate, a second plate, and a side plate. A vacuum space may be provided between the first plate and the second plate. The refrigerator of the present disclosure may include at least one panel. The present disclosure may include: a first panel forming at least a portion of a first surface (e.g., side surface) of the refrigerator; a second panel forming at least a portion of a second surface (e.g., rear surface) of the refrigerator; a third panel forming at least a portion of a third surface (e.g., top surface) of the refrigerator; a fourth panel forming at least a portion of a fourth surface (e.g., bottom surface) of the refrigerator; and a fifth panel forming at least a portion of a fifth surface (e.g., front surface) of the refrigerator. One or more of the first, second, third, fourth, and fifth surfaces of the refrigerator may provide at least a portion of a wall forming the main body or at least a portion of a wall forming the door. One or more of the first, second, third, fourth, and fifth panels may be provided as a single component or as multiple components. The joint may be provided to connect edges of the refrigerator or to connect a first wall and a second wall which form the refrigerator wall. The joint may be provided to connect the panel to another component (e.g., another panel). The joint may be provided to connect at least two or more of the first, second, third, fourth, and fifth panels. One or more of the first, second, third, fourth, and fifth panels may be provided in multiple parts, and the joint may be provided to connect the plurality of panels to each other. The joint may include a first surface, a second surface, and/or a third surface. The first surface of the joint may cover at least a portion of at least one of the first, second, third, fourth, and fifth panels. The second surface of the joint may cover at least a portion of at least another one of the first, second, third, fourth, and fifth panels. The third surface of the joint may be connected to the first surface of the joint and/or the second surface of the joint. The third surface of the joint may be connected to an corner of the first surface of the joint and/or an corner of the second surface of the joint. The third surface of the joint may be formed to be inclined with respect to at least one of the first surface of the joint and the second surface of the joint. At least some of the first, second, third, fourth, and fifth panels may be provided as a panel including a first thermal insulation performance per unit thickness, and at least some others of the first, second, third, fourth, and fifth panels may be provided as a panel including a second thermal insulation performance per unit thickness. The first thermal insulation performance and the second thermal insulation performance may be different from each other.

The insulator or refrigerator of the present disclosure may include a duct. The duct may include a first duct, a second duct, and/or a third duct. The first duct may supply cold air to the first storage compartment or the second storage compartment. The second duct may receive an evaporator. The third duct may be connected in communication with the first duct and the second duct. The third duct may include a first surface, a second surface, a third surface, a fourth surface, and/or a fifth surface. The first surface of the third duct may surround the first surface of the joint. The second surface of the third duct may surround the second surface of the joint. The third surface of the third duct may surround the third surface of the joint. The third duct may further include a fourth surface. The fourth surface of the third duct may be disposed to extend from the first surface of the third duct or face the second storage compartment. The fifth surface of the third duct may be disposed to extend from the second surface of the third duct or to face the evaporator.

The insulator or refrigerator of the present disclosure may include a block. The block may include a portion extending in the same direction as one or more of the first, second, third, fourth, and fifth panels. The block may include a portion extending in a different direction from one or more of the first, second, third, fourth, and fifth panels. The block may include a first surface (e.g., left surface), a second surface (e.g., right surface), a third surface (e.g., rear surface), a fourth surface (e.g., bottom surface), a fifth surface (e.g., top surface), and a sixth surface (e.g., front surface). Some of the first, second, third, fourth, and fifth surfaces of the refrigerator may be provided in the form of a panel, and some others of the first, second, third, fourth, and fifth surfaces of the refrigerator may be provided in the form of a block. The block may be provided as the non-vacuum insulator. For example, the block may be a block cover and/or polyurethane (PU) foam filling the inside of the block cover. The block may include one or more of a first block portion (e.g., side block portion), a second block portion (e.g., rear block portion or front block portion), and a third block portion (e.g., bottom block portion or top block portion). Each of the first, second, and third block portions may be provided in multiple parts. At least two or more of the first, second, and third block portions may be connected and provided as the joint. The third block portion may form one surface of the first storage compartment and/or may form one surface of the machine compartment. The third block portion may be provided as a partition wall, or may form one surface of the first storage compartment.

The insulator or refrigerator of the present disclosure may include an insulation reinforcing portion. The insulation reinforcing portion may include a portion connected to one side of the block or a portion formed to protrude from the block.

The insulator or refrigerator of the present disclosure may include a hinge. The hinge may be disposed on one side of the insulator. The hinge may be disposed on the main body and/or door of the refrigerator.

The hinge may include one or more of: a hinge fixing part that is coupled to at least one of the insulator, the main body of the refrigerator, and the door of the refrigerator; a hinge shaft; and a hinge connecting portion that protrudes and extends from the hinge fixing part. The hinge may include one or more of: a first hinge (e.g., upper hinge) disposed on one side of a wall forming the first storage compartment; a second hinge (e.g., middle hinge) disposed on the partition wall; and a third hinge (e.g., lower hinge) on a wall forming the second storage compartment. The insulator or refrigerator of the present disclosure may include one or more of: a hinge reinforcing frame for reinforcing the strength of the hinge; a cover to which the hinge is coupled; and a hinge reinforcing plate that is configured to be connected to or received in the panel. The hinge reinforcing frame may include one or more of first, second, third, and fourth frame portions. At least two of the first, second, third, and fourth frame portions may extend in different directions.

The insulator or refrigerator of the present disclosure may include a support frame. The support frame may support one surface of the panel. The support frame may include a coupling portion. The block may be supported on the machine compartment by the support frame. The support frame may include a first support frame and/or a second support frame.

The insulator or refrigerator of the present disclosure may include an inner cover. The inner cover may be disposed between the cover of the machine compartment and the hinge reinforcing frame (e.g., the first frame portion).

The insulator or refrigerator of the present disclosure may include a decoration. The decoration may be disposed on a surface of the insulator. The decoration may be disposed on a surface of the main body and/or door of the refrigerator. For example, the decoration may be disposed on an outer surface of the insulator or on an outer surface of the refrigerator.

The insulator or refrigerator of the present disclosure may include a hot line. The hot line may be disposed on a surface of the insulator. The hot line may be disposed on a surface of the main body and/or door of the refrigerator. The hot line may be disposed between the decoration and the surface of the insulator. The hot line may be disposed between the decoration and the surface of the refrigerator and/or between the decoration and the surface of the door.

The insulator or refrigerator of the present disclosure may include a casing. The casing may be an exterior casing or an interior casing. The exterior casing may be connected to the second plate. The exterior casing may be provided to cover at least a portion of the second plate. The exterior casing may be provided in contact with the second plate or spaced apart from the second plate by a predetermined distance. The interior casing may be connected to the first plate. The interior casing may be provided to cover at least a portion of the first plate. The interior casing may be provided in contact with the first plate or spaced apart from the first plate by a predetermined distance.

The insulator or refrigerator of the present disclosure may include a drawer and/or a drawer guide. The drawer guide may be provided with a first storage compartment drawer guide provided in the first storage compartment. The first storage compartment drawer guide may include at least one of a first plate (e.g., side plate), a second plate (e.g., bottom plate), a third plate (e.g., top plate), and a fourth plate (e.g., middle plate).

The drawer guide may include a second storage compartment drawer guide provided in the second storage compartment.

The insulator or refrigerator of the present disclosure may include a shelf and/or a shelf support frame.

[Detailed Description for Implementing the Invention] is divided into the foregoing [Common Description] and the following [Description Based on Drawings]. In the [Detailed Description for Implementing the Invention], each specific matter described for implementing the invention may be understood as an embodiment of the present disclosure. In the [Detailed Description for Implementing the Invention], a combination of at least two or more of the specific matters described for implementing the invention may also be understood as an embodiment of the present disclosure. For example, in the [Detailed Description for Implementing the Invention], each paragraph of the [Common Description] section or the section described based on the drawings, as well as a combination of such paragraphs, may be understood as an embodiment of the present disclosure. In another example, in the [Detailed Description for Implementing the Invention], each sentence of the [Common Description] section or the section described based on the drawings, as well as a combination of such sentences, may be understood as an embodiment of the present disclosure.

Hereinafter, based on each drawing, the [Description Based on Drawings] section describing the present disclosure will be set forth.

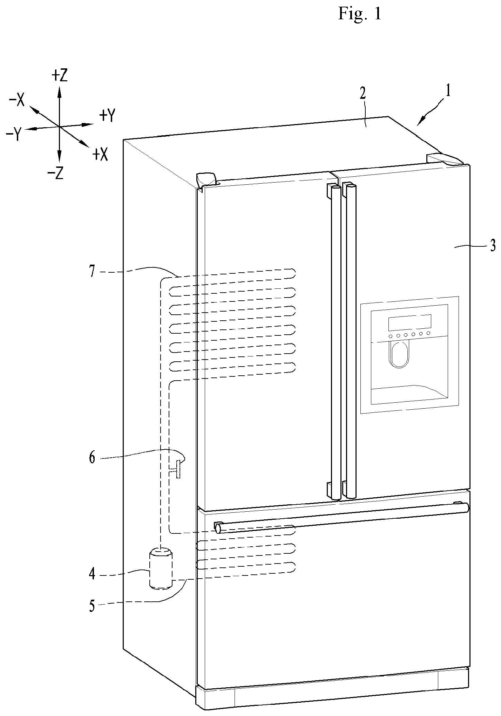

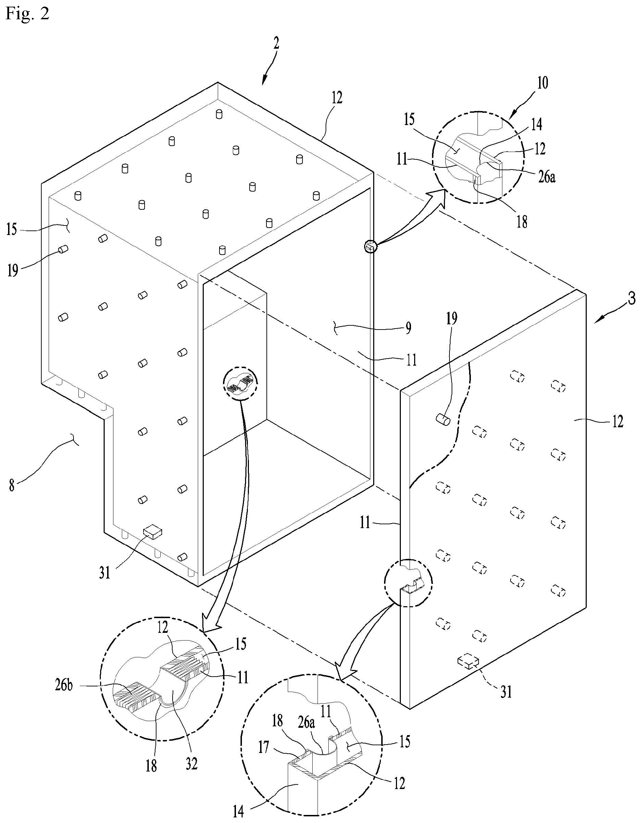

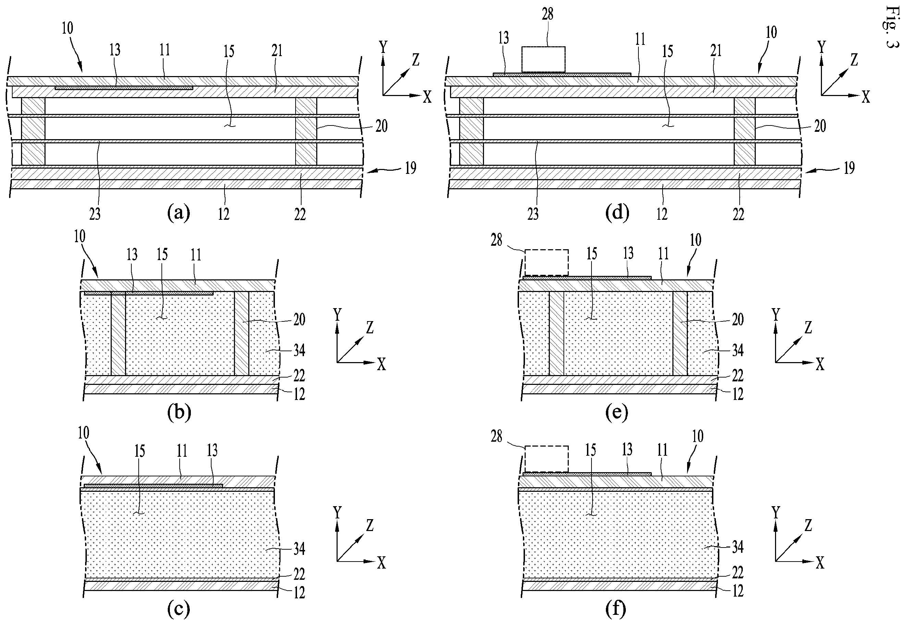

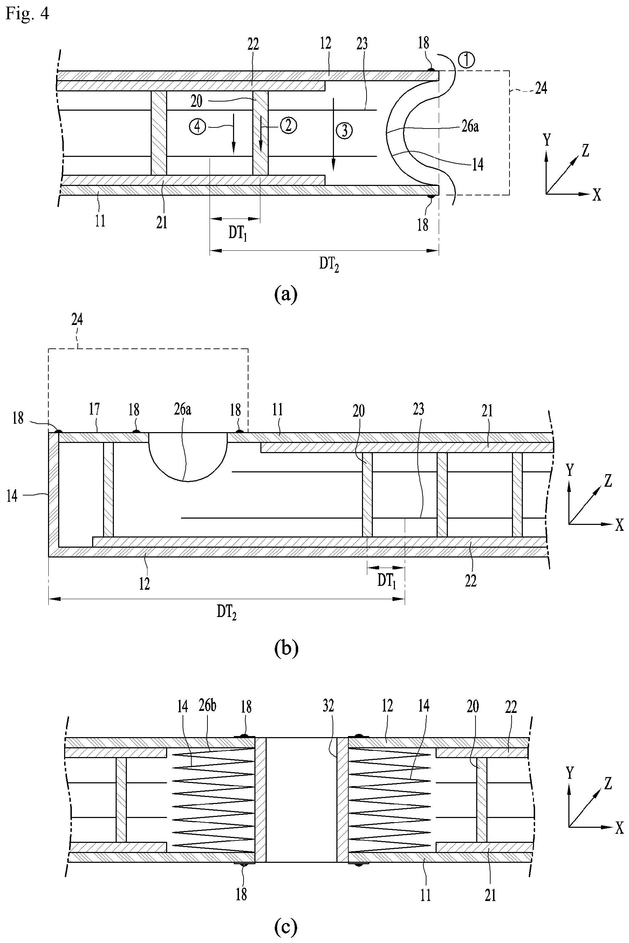

Referring to FIGS. 1 to 4, the insulator 10 of the present disclosure may include plates 11, 12, and 14. In the present disclosure, the term "plate" may refer to at least one of the first plate 11, the second plate 12, and the side plate 14. Optionally, the insulator of the present disclosure may include a vacuum space 15. The vacuum space 15 may be formed by walls provided by the plates 11, 12, and 14. The vacuum space 15 may include a thickness in a first direction. The plates 11, 12, and 14 may include: the first plate 11; and the second plate 12. The first plate 11 may include a portion extending in a direction different from the first direction. The second plate 12 may include a portion extending in another direction different from the first direction. Optionally, the plates may include a side plate 14 including a portion extending in the first direction. For example, the insulator 10 of the present disclosure may be provided such that the first plate 11, the second plate 12, and the side plate 14 may be each provided as separate components, and the separate components may be provided to be connected to one another. In another example, the insulator 10 of the present disclosure may be provided such that at least two of the first plate 11, the second plate 12, and the side plate 14 are integrally provided, and such that the separate components are connected to one another. In yet another example, the insulator 10 of the present disclosure may be provided such that portions connecting the first plate 11, the second plate 12, and the side plate 14 are each integrally provided. In this case, the first plate 11 may be provided as a separate component, and the separate components may be provided to be connected to one another. Alternatively, the second plate 12 may be provided as a separate component, and the separate components may be provided to be connected to one another. Alternatively, the side plate 14 may be provided as a separate component, and the separate components may be provided to be connected to one another. Optionally, the insulator 10 of the present disclosure may include a third plate disposed on at least a portion of the insulator 10 or connected to at least a portion of the plates 11, 12, 14. The third plate may include a portion provided to be thinner than or equal in thickness to the plates 11, 12, and 14. The third plate may include a portion provided to be thicker than the plates 11, 12, and 14. The third plate may be disposed in the vacuum space 15 or disposed outside the vacuum space 15. Examples of the third plate may include a heat transfer resistor 23, 26a, 26b, and 34, a deformation resistor 13, and the like, as described in the present disclosure.

Optionally, the insulator 10 of the present disclosure may include a heat transfer resistor 23, 26a, 26b, and 34 (thermal insulator) for reducing the amount of heat transfer between a first space provided adjacent to the first plate 11 and a second space provided adjacent to the second plate 12, or for reducing the amount of heat transfer between the first plate 11 and the second plate 12. A heat transfer resistor that reduces the amount of heat transfer by conduction may be defined as a conduction resistance sheet 26a and 26b, and a heat transfer resistor that reduces the amount of heat transfer by radiation may be defined as a radiation resistance sheet 23. The heat transfer resistor 23, 26a, 26b, and 34 may be provided as a porous material 34 or as a filler 34. A filler whose inside is filled with a porous material may be defined as the porous material 34. The heat transfer resistor 23, 26a, 26b, and 34 may include at least one of the radiation resistance sheet 23, the porous material 34, the filler 34, and the conduction resistance sheet 26a and 26b, or a mixture of at least two thereof. The heat transfer resistor 23, 26a, 26b, and 34 may be provided not to be connected to at least a portion of the plates 11, 12, and 14 or make contact with the plates 11, 12, and 14. A shield 24 may be provided for insulation outside the heat transfer resistor 23, 26a, 26b, and 34. A connecting frame 17 may be provided outside the heat transfer resistor 23, 26a, 26b, and 34. The insulator 10 may include a conduit penetrating the vacuum space 15. The conduit may be formed by providing a pipe wall 32 as a separate component, or may be provided in such a manner that the pipe wall 32 is omitted and only a through-hole is formed in the plate. The side plate 14 may be provided adjacent to the conduit, or the heat transfer resistor 23, 26a, 26b, and 34 may be provided adjacent to the conduit.

Optionally, the insulator 10 of the present disclosure may include a deformation resistor 13 connected to at least a portion of the plates 11, 12, and 14 to increase the internal deformation resistance of the plates 11, 12, and 14. When the deformation resistor is provided in the form of a plate, the deformation resistor may be referred to as a deformation resistant plate.

Optionally, the insulator 10 of the present disclosure may include a support 19 that is connected to at least a portion of the plates 11, 12, and 13 and holds the vacuum space 15. The support 19 may include a bar 20 including a portion extending in the first direction, which is the thickness direction of the vacuum space 15. The support 19 may include a support plate 22 including a portion extending in a direction different from the first direction. The support 19 may include a plurality of bars 20 and a connecting plate 21 connecting the plurality of bars 20. The support 19 may include at least one of the bars 20, the connecting plate 21, and the support plate 22 or a combination of at least two thereof.

Optionally, the insulator 10 of the present disclosure may include a component coupling portion that provides a portion on which the components 24, 28, and 32 are disposed or supported. For example, when the component coupling portion is provided in the form of a plate, the component coupling portion may be referred to as a component coupling plate. A component connected to the component coupling portion may include a pass-through component configured to penetrate at least a portion of the insulator 10 or at least a portion of the plates 11, 12, and 14. A component connected to the component coupling portion may include a surface component configured to be connected to a surface of the insulator 10 or to be connected to a surface of the plates 11, 12, and 14. The pass-through component may be a component that forms a path through which a fluid (e.g., electricity, refrigerant, water, and air) passes. The pass-through component may be provided in the form of a tube. The tube may include a straight tube and/or a curved tube. The tube may be provided in multiple parts, or may extend in one direction. The pass-through component may include at least one of the tube, a first lead-out portion, and a second lead-out portion. In the present disclosure, the term "fluid" is defined as any kind of object that flows. The fluid may include a moving solid, liquid, gas, and electricity. The pass-through component may be a component that forms a path through which a refrigerant for heat exchange passes, such as a suction line heat exchanger (SLHX) or a refrigerant pipe. The SLHX may be understood as a suction line heat exchanger that performs heat exchange between a refrigerant that has passed through the evaporator and a refrigerant before being introduced into the evaporator. The pass-through component may be a wire that supplies electricity to the apparatus. The pass-through component may be a component that forms a path through which air can pass, such as a duct or port along whose surface fluid flows. The port may include an exhaust port that provides a path for air to escape from a space formed between the first plate 11 and the second plate 12, in order to form the vacuum space 15. The pass-through component may be a path through which a fluid such as cooling water, hot water, ice, and defrost water can pass. Examples of the surface component may include peripheral insulation, a side panel, injected foam, pre-prepared resin, a hinge, a latch, a basket, a drawer, a shelf, a light, a sensor, an evaporator 7, a front decoration, a hotline, a heater, an outer cover, and an inner cover.

Through FIGS. 1 to 4, the terms plate, first plate, second plate, side plate, third plate, vacuum space, heat transfer resistor, conduction resistance sheet, radiation resistance sheet, porous material, filler, component coupling portion, joint, support, bar, support plate, connecting plate, deformation resistor, deformation resistance plate, component coupling portion, component coupling plate, pass-through component, surface component, duct, and port have been defined. In the present disclosure, when the above terms are used for portions other than the portions with respect to which the explanations of FIGS. 1 to 4 are described, the terms used shall be interpreted as defined in FIGS. 1 to 4.

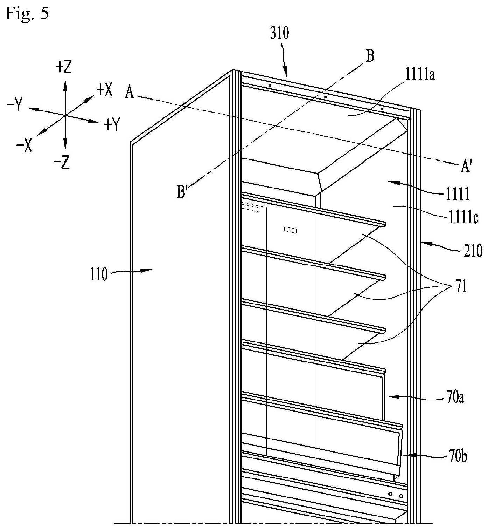

In the present disclosure, the expression "object A is connected to object B" may be defined as object A being directly connected to at least a portion of object B, or at least a portion of object A being connected to at least a portion of object B through an intermedium disposed between objects A and B. In a modification, the expression "object A is connected to object B" may include object A and object B being integrally prepared in such a manner as to be connected by the aforementioned method. In the present disclosure, examples of connection may include supporting, combining, and sealing, as described below. In the present disclosure, the expression "object A is supported by object B" may be defined as object A being restricted in movement in one or more of the +X, -X, +Y, -Y, +Z, and -Z axis directions by object B. In the present disclosure, examples of supporting may include combining and sealing, as described below. In the present disclosure, the expression "object A is combined with object B" may be defined as object A being restricted in movement in one or more of the X, Y, and Z axis directions by object B. In the present disclosure, an example of combining may include sealing, as described below. In the present disclosure, the expression "object A is sealed to object B" may be defined as a state in which movement of fluid is not permitted at a portion where object A and object B are connected. In the present disclosure, at least a portion of one or more objects, i.e., object A and object B, may be defined as including: a portion of object A, the entirety of object A, a portion of object B, the entirety of object B, a portion of object A and a portion of object B, a portion of object A and the entirety of object B, the entirety of object A and a portion of object B, and the entirety of object A and the entirety of object B. In the present disclosure, the expression "plate A may be a wall defining space A" may be defined as at least a portion of plate A being a wall forming at least a portion of space A. That is, at least a portion of plate A may be a wall forming space A, or plate A may be a wall forming at least a portion of space A. In the present disclosure, a central portion of an object may be defined as a portion located in the center when the object is divided into three equal parts along the lengthwise direction of the object. A peripheral portion of the object may be defined as a portion located on one side or the other side of the central portion among the three equal parts. The peripheral portion of the object may include a surface adjoining the central portion and a surface opposite thereto. The surface opposite thereto may be defined as a border or corner of the object. In the present disclosure, the degree of deformation resistance indicates the extent to which the object resists deformation, which may be defined as a value determined by a shape including the thickness of the object, the material of the object, and the processing method of the object. In the present disclosure, the degree of heat transfer resistance indicates the extent to which the object resists heat transfer, which may be defined as a value determined by a shape including the thickness of the object, the material of the object, and the processing method of the object. In the present disclosure, the degree of heat transfer resistance may be defined as at least one of the degree of conduction resistance, the degree of radiation resistance, and the degree of convection resistance or a combination of at least two thereof. In the following description, the terms "upper side," "lower side," "right side," "left side," "front side," and "rear side" shall be understood with reference to the coordinate system illustrated in FIGS. 1 and 5. An example of "+Z" may mean "upper side," an example of "-Z" may mean "lower side," an example of "+Y" may mean "right side," an example of "-Y" may mean "left side," an example of "+X" may mean "front side," and an example of "-X" may mean "rear side." In this specification, the front-rear direction as used herein may be an example of the X-axis direction, the left-right direction may be an example of the Y-axis direction, and the up-down direction may be an example of the Z-axis direction.

The insulator 10 of the present disclosure may be applied to a refrigerator 1. The refrigerator 1 may include a main body 2 provided with a cavity 9 for storing storage items, and a door 3 provided to open and close the main body 2. A cold source for supplying cold air to the cavity 9 may be provided. For example, the cold source may be an evaporator 7 that evaporates refrigerant to take heat. The refrigerator may include a compressor 4 that compresses the refrigerant. The refrigerator may include a condenser 5 that condenses the compressed refrigerant. The condenser 5 may be connected to an expander 6 that expands the condensed refrigerant.

FIG. 5 illustrates an example in which a casing 1111 of a first embodiment is provided in insulators 110, 210, and 310.

In one example, the casing 1111 may be provided on one surface of the insulators 110, 210, and 310. The casing 1111 may be arranged to cover at least a portion of one surface or an inner surface of a first plate 111 and 311. The casing 1111 may include a portion that is at least partially bent and connected to one side of the first plate 111 and 311. In one example, the casing 1111 may include a portion that is at least partially bent and coupled to an corner of the first plate 111 and 311.

In the present disclosure, since the first plate 111 and 311 and the casing 1111 form a space inside the main body, the first plate 111 and 311 and the casing 1111 may be collectively referred to as "inner casing."

The casing 1111 may be provided on the outside of a vacuum space 115 and 315.

The casing 1111 may include at least two surfaces that intersect each other. The casing 1111 may include portions that are bent at least at two places. At least two surfaces of the casing 1111 may be formed as a single member. In the present disclosure, an example in which at least two surfaces of the casing 1111 are formed as a single member, and an example in which at least two surfaces are formed as separate parts will be illustrated and described.

The casing 1111 may include a first surface 1111a and second and third surfaces 1111b and 1111c formed by bending from both sides of the first surface 1111a in a direction intersecting it.

The casing 1111 may be provided with a block cover 1111d covering the block.

The block cover 1111d may be provided, for example, at an corner between the first surface 1111a and the second surface 1111b.

Optionally, the casing 1111 may be provided with a portion for connecting to a component.

For example, one side of the casing 1111 may be provided with a component connector. The component connector may be provided in a gap between one side of the component and the insulators 110, 210, and 310. Accordingly, it is possible to prevent the insulators 110, 210, and 310 from being exposed at the gap between one side of the component and the insulators 110, 210, and 310 and prevent damage to the surfaces of the insulators 110, 210, and 310. The component connected to component connectors 1111b', 1111b", 1111c', and 1111c" may be, for example, at least one of a drawer guide and a drawer.

For example, the component connectors 1111b', 1111b", 1111c', and 1111c" may be provided on at least one side of the second surface 1111b and the third surface 1111c.

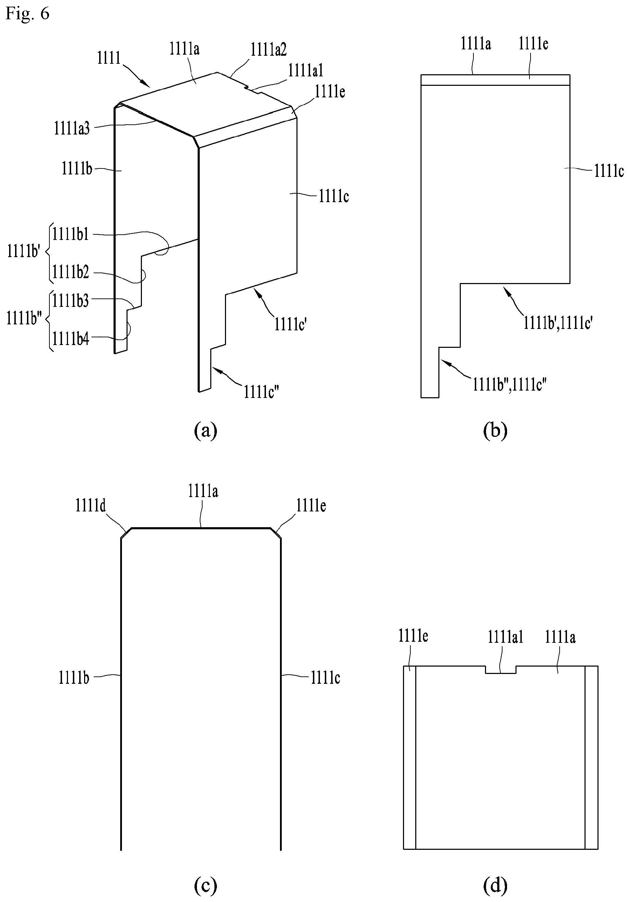

FIGS. 6a and 6b illustrate an example in which the component connectors 1111b', 1111b", 1111c', and 1111c" are provided on the second surface 1111b and the third surface 1111c. The component connectors may include, for example, a first component connector 1111b' and 1111c' and a second component connector 1111b" and 1111c", which are connected respectively to two components. The first component connector 1111b' and 1111c' may include a first side portion 1111b1 and a second side portion 1111b2 which are formed in directions intersecting each other. Likewise, the second component connector 1111b" and 1111c" may include a third side portion 1111b3 and a fourth side portion 1111b4 which are formed in directions intersecting each other.

An example is illustrated of the first component connectors 1111b' and 1111c', in which a first side portion 1111b1 and a second side portion 1111b2 are respectively connected to one side 70a-1 of a first component 70a and another side 70a-2 intersecting the one side. In the second component connectors 1111b" and 1111c", a third side portion 1111b3 and a fourth side portion 1111b4 are respectively connected to one side and another side intersecting the one side of a second component 70b.

By such a structure, portions of the casing 1111 around the component connectors 1111b', 1111b", 1111c', and 1111c" can prevent exposure of one surface of the insulators 110, 210, and 310 near one side of the components 70a and 70b.

In addition, the component connectors may be configured such that an area not connected to a component is formed on an outer side of at least one of the first to fourth side portions 1111b1, 1111b2, 1111b3, and 1111b4. As a result, heat transfer from the component to the insulators 110, 210, and 310 can be reduced. That is, the effect of reducing thermal bridges from the component to the insulators 110, 210, and 310 can be achieved.

Optionally, the casing 1111 may be provided with a portion that is formed by cutting out at least a part thereof not to connect to the component.

An example is illustrated in which the first surface 1111a of the casing 1111 is provided with a cutout portion 1111a1 which is formed by cutting at least a part not to connect to the component. The cutout portion 1111a1 may be formed on one side of the first surface 1111a.

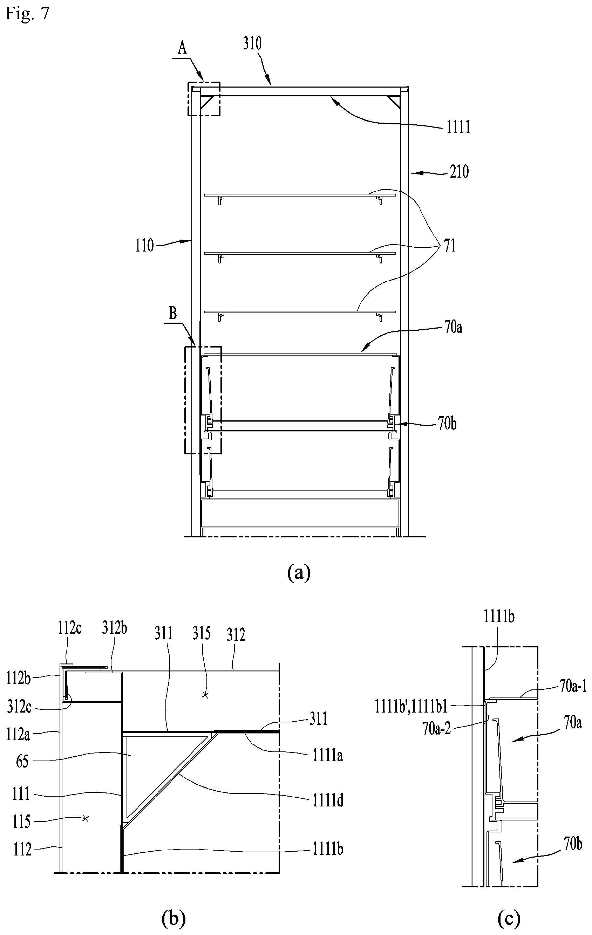

FIG. 7b illustrates an example in which the block cover 1111d covers the block 65. The block cover 1111d may be provided at least either between the first surface 1111a and the second surface 1111b or between the first surface 1111a and the third surface 1111c.

The block 65 may include a non-vacuum insulator, for example. The block 65 may be formed by filling the inside of the block cover 1111d with a PU foaming solution and then foam-molding it.

The block cover 1111d may be formed between the first surface 1111a and the second surface 1111b, or the block cover 1111d may be formed to be bent at a predetermined angle with respect to at least one of the first surface 1111a and the second surface 1111b. The block cover 1111d may be formed to be bent at a predetermined angle with respect to each of the first surface 1111a and the second surface 1111b, between the first surface 1111a and the second surface 1111b.

The block cover 1111d may be formed between the first surface 1111a and the third surface 1111c, or the block cover 1111d may be formed to be bent at a predetermined angle with respect to at least one of the first surface 1111a and the third surface 1111c. The block cover 1111d may be formed to be bent at a predetermined angle with respect to each of the first surface 1111a and the third surface 1111c, between the first surface 1111a and the third surface 1111c.

The block cover 1111d may be arranged to be closely attached to one surface of the block 65. The first surface 1111a and the second surface 1111b connected to the block cover 1111d are connected to the first plate 111 and 311 of the third insulator 110, 210, and 310 and the first plate 111 and 311 of the first insulator 110, 210, and 310, respectively.

The block cover 1111d may be provided on at least one side of the casing 1111.

As the casing 1111 is provided with the block cover 1111d, cold air or moisture delivered through the block can be blocked. Optionally, the block 65 may be protected from external force by the block cover 1111d.

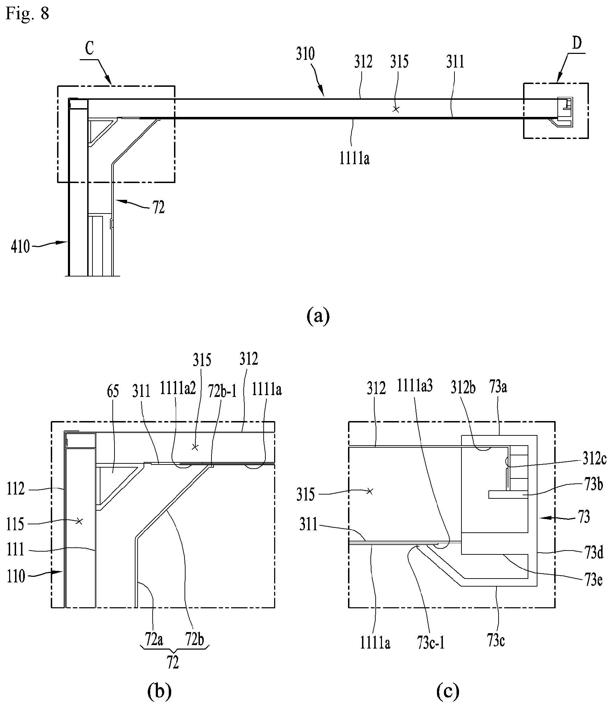

Optionally, the casing 1111 may be provided with fixing side portions 1111a2 and 1111a3 that are coupled to components. For example, the fixing side portions 1111a2 and 1111a3 may be inserted and coupled between a component and the first plate 111 and 311 of the insulators 110, 210, and 310. The components coupled to the fixing side portions 1111a2 and 1111a3 may be illustrated as a multi-duct cover 72 and a decorative bracket 73, respectively, in FIGS. 8b and 8c.

Referring to FIGS. 8a to 8c, an example of the casing 1111 is illustrated in which a first fixing side portion 1111a2 is provided on one side of the casing 1111, and a second fixing side portion 1111a3 is provided on another side thereof spaced apart from the one side.

The first fixing side portion 1111a2 may be inserted between the first plate 111 and 311 and one side of the multi-duct cover 72, on one side of the casing 1111.

The first fixing side portion 1111a2 includes a point connecting to one side of the multi-duct cover 72, and extends further than the connecting point toward the inside of the multi-duct cover 72.

In FIG. 8b, an example is illustrated in which the multi-duct cover 72 includes a first cover 72a extending in a longitudinal direction of the first insulator 110 and a second cover 72b extending to be bent therefrom. One side of the second cover 72b may be provided with a cover fixing side portion 72b-1. An example is illustrated in which the first fixing side portion 1111a2 is inserted between the first plate 111 and 311 and the cover fixing side portion 72b-1 of the multi-duct cover 72.

The second fixing side portion 1111a3 may be inserted between the first plate 111 and 311 and one side of the decorative bracket 73, on the other side of the casing 1111.

The second fixing side portion 1111a3 includes a point connecting to one side of the decorative bracket 73, and extends further than the connecting point toward the inside of the decorative bracket 73.

Referring to FIG. 8c, an example is illustrated in which the decorative bracket 73 includes, for example, a first portion 73a supported on the outside of the second plate 312, a second portion 73b supported on a bent portion 312c of the second plate 312, a coupling support portion 73c that supports the second fixing side portion 1111a3 of the casing 1111a to be couplable, and a third portion 73d that supports a side portion of the first plate.

Referring to FIG. 8c, an example is illustrated in which the second fixing side portion 1111a3 includes a point connecting to a coupling support end 73c-1 of the coupling support portion 73c of the decorative bracket 73, and extends further than the connecting point toward the inside of the coupling support portion 73c of the decorative bracket 73.

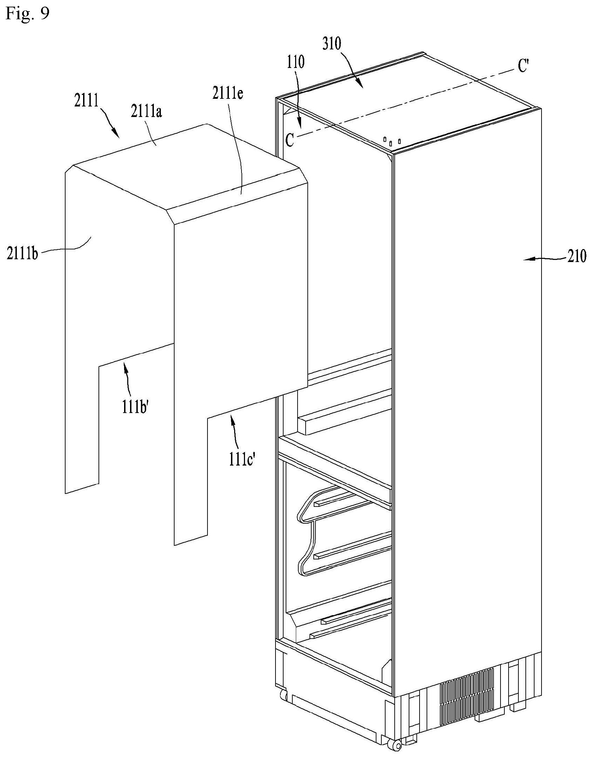

FIG. 9 illustrates insulators 110, 210, and 310 provided with a casing 2111 of a second embodiment.

In FIG. 9, the casing 2111 differs in part from the previous embodiment in terms of the component connectors 2111b' and 2111c' and the fixing side portions. The following describes these differences.

The component connectors 2111b' and 2111c' in FIG. 9 differ from the component connectors 2111b' and 2111c' in FIGS. 6a and 6b, which include four side portions, in that they include two side portions formed in directions intersecting each other.

FIG. 9 illustrates component connectors 2111b' and 2111c' including a first side portion and a second side portion.

The component connectors 2111b' and 2111c' may include at least one of the first side portion and the second side portion. In the vicinity of at least one of the first and second side portions of the component connectors 2111b' and 2111c', part of the casing 2111 can prevent one surface of the insulators 110 and 210 from being exposed near one side of the component. By including the first and second side portions in the component connectors 2111b' and 2111c', part of the casing 2111 in the vicinity of the first and second side portions of the component connectors 2111b' and 2111c' can prevent one surface of the insulators 110 and 210 from being exposed near one side of the component.

In addition, the component connectors 2111b' and 2111c' may be configured such that an area not connected to a component is formed on an outer side of the first and/or second side portion. As a result, heat transfer from the component to the insulators 110 and 210 can be reduced. That is, the effect of reducing thermal bridges from the component to the insulators 110 and 210 can be achieved.

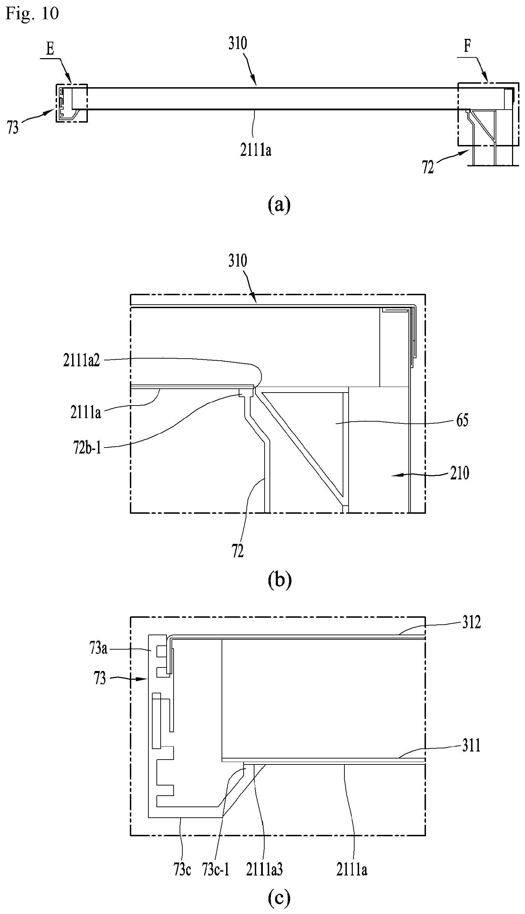

Referring to FIGS. 10a to 10c, the first fixing side portion 2111a2 may be coupled to one side of the multi-duct cover 72. The first fixing side portion 2111a2 includes a point connecting to one side of the multi-duct cover 72, and differs from FIG. 8b in that it does not extend further than the connecting point toward the inside of the multi-duct cover 72. That is, the cover fixing side portion 72b-1 of the multi-duct cover 72 and the first fixing side portion 2111a2 may form a connection length corresponding to a predetermined width.

The first fixing side portion 2111a2 may be spaced apart from the block 65 without overlapping it.

The second fixing side portion 2111a3 may be coupled to one side of the decorative bracket 73. The second fixing side portion 2111a3 includes a point connecting to one side of the decorative bracket 73, and differs from FIG. 8c in that it does not extend further than the connecting point toward the inside of the decorative bracket 73. That is, one side of the decorative bracket 73 and the second fixing side portion 2111a3 may form a connection length corresponding to a predetermined width.

By including the first and/or second fixing side portions 2111a2 and 2111a3, the casing 2111 may form a structure that is coupled in one direction to the insulator 310. The one direction in which the casing 2111 is coupled to the insulator 310 may be +x and -x directions.

What is not described in FIGS. 9 to 10c are to be understood by reference to the foregoing descriptions made with reference to FIGS. 5 to 8c.

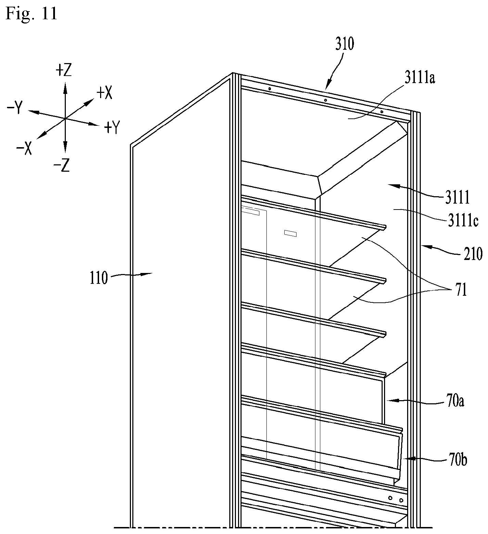

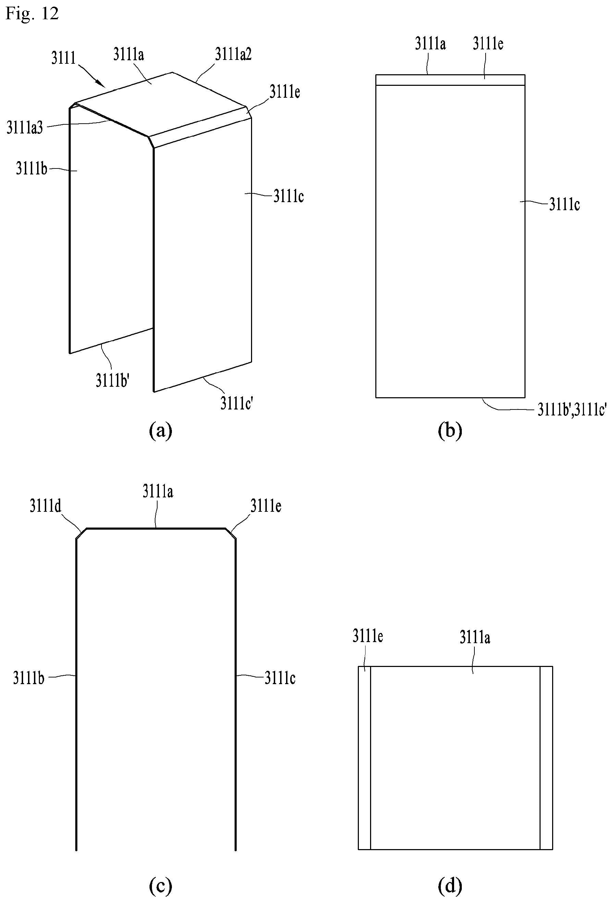

FIG. 11 illustrates insulators 110, 210, and 310 provided with a casing 3111 of a third embodiment. Referring to FIGS. 12a to 12d, the casing 3111 differs from the casings 1111 and 2111 of FIGS. 6a and 9 in that the component connectors 3111b' and 3111c' do not include components such as first to fourth side portions.

Optionally, the component connectors 3111b' and 3111c' of the casing 3111 may include a portion connecting to a component on one side, a portion extending to one side of the component, or a portion spaced apart from one side of the component.

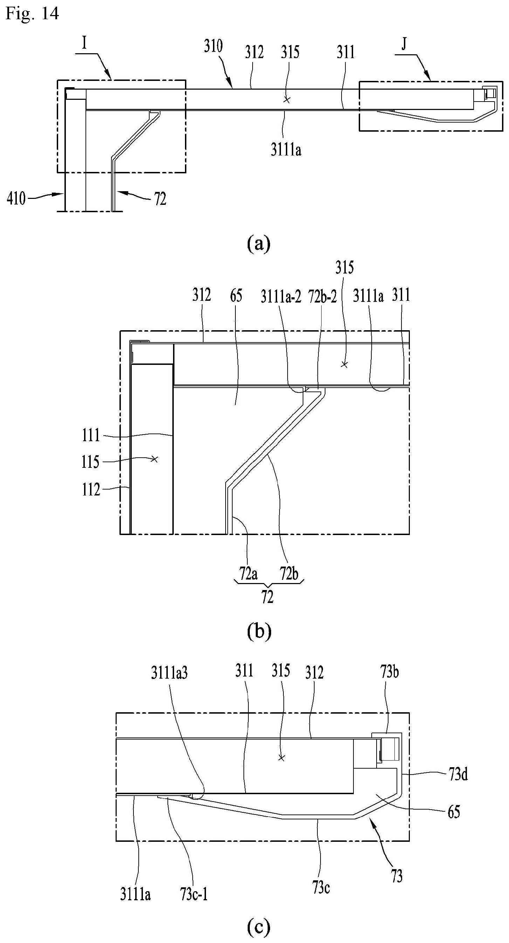

Referring to FIGS. 14a to 14c, the casing 3111 of the third embodiment will be described.

The casing 3111 may be coupled to at least one component.

Referring to FIGS. 14a to 14c, an example is illustrated in which one side of the casing 3111 and another side provided at a portion spaced apart from the one side are respectively coupled to components.

For example, one side of the casing 3111 may be coupled to the multi-duct cover 72. The other side of the casing 3111 may be coupled to the decorative bracket 73.

A first fixing side portion 3111 a2 may be provided on one side of the casing 3111.

A surface of the multi-duct cover 72 facing the first fixing side portion 3111a2 may include a portion bent toward one side. The first fixing side portion 3111a2 may be coupled between the bent portion 72b-2 of the multi-duct cover 72 and the first plate 111 and 311.

As a result, one side of the casing 3111 can be coupled to one surface of the insulator 310. The multi-duct cover 72 forms a structure that couples one side of the casing 3111 to the first plate 111 and 311, so that the casing 3111 can be firmly coupled between the first plate 111 and 311 and the multi-duct cover 72.

As illustrated in FIG. 14b, the first fixing side portion 3111a2 may extend to an end of the bent portion 72b-2 of the multi-duct cover 72.

A block 65 may be provided inside the multi-duct cover 72. The block 65 may be provided at a side portion where the first insulator 110, 210, and 310 and the second insulator 110, 210, and 310 are connected.

The first fixing side portion 3111a2 may be arranged so that one side is spaced apart from the block 65. The first fixing side portion 3111a2 may be arranged so that one side does not overlap the block 65.

By being spaced apart from the block 65, the first fixing side portion 3111a2 can reduce thermal bridges. As a result, the flow of cold air through the casing 3111 to the block 65 can be reduced, thereby improving insulation performance.

A second fixing side portion 3111a3 may be provided on the other side of the casing 3111. The decorative bracket 73 may include a shape in which it is bent multiple times. By being bent multiple times, the decorative bracket 73 can secure a longer region on one side of the first insulators 110, 210, and 310 where the block 65 can be installed. This allows for better insulation performance on one side of the first insulator 110, 210, and 310.

The second fixing side portion 3111a3 may be coupled between one side of the decorative bracket 73 and the first plate 111 and 311. The other side of the decorative bracket 73 may be coupled to the second plate.

As a result, the other side of the casing 3111 can be coupled to one surface of the insulators 110, 210, and 310. By being coupled to the second plate, the decorative bracket 73 forms a structure that couples the other side of the casing 3111 to the first plate 111 and 311, so that the casing 3111 can be firmly coupled between the first plate 111 and 311 and the decorative bracket 73.

As illustrated in FIG. 14c, the second fixing side portion 3111a3 may extend to the coupling support end 73c-1 of the coupling support portion 73c of the decorative bracket 73.

The block 65 may be provided inside the decorative bracket 73. The block 65 may be provided at a side portion of the third insulator 110, 210, and 310.

The second fixing side portion 3111a3 may be arranged so that one side is spaced apart from the block 65. The second fixing side portion 3111a3 may be arranged so that one side does not overlap the block 65.

The second fixing side portion 3111a3 may be spaced apart from the block 65, thereby reducing thermal bridges. As a result, the flow of cold air through the casing 3111 to the block 65 can be reduced, thereby improving insulation performance.

Optionally, the casing 4111 may be provided with a bent support portion 4111a3 that is formed by bending from one side and supported by a component. The casing 4111 may be provided with a fixing side portion 4111a2 on another side thereof spaced apart from the one side.

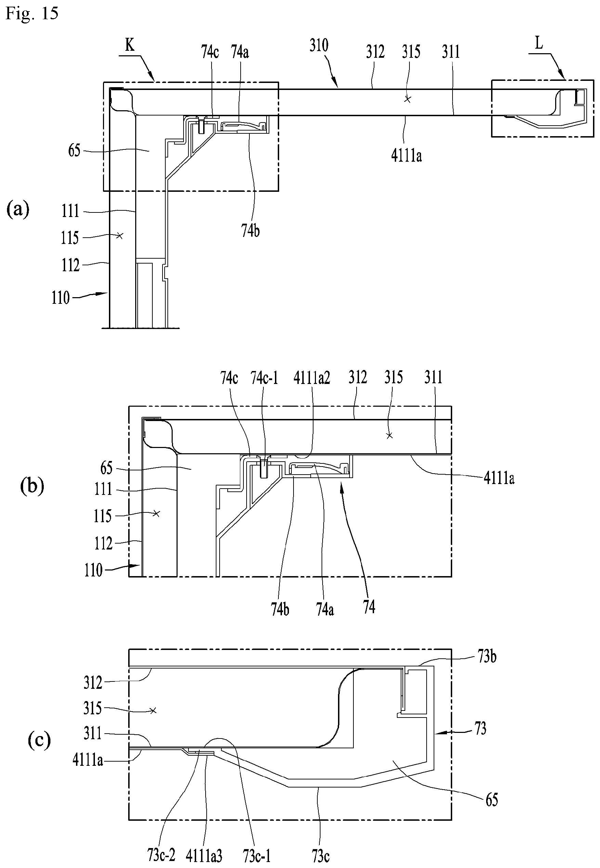

In FIG. 15c, a bent support portion 4111a3 supported on one side of the component is illustrated. The decorative bracket 73c may include a coupling support end 73c-1 whose one side is connected to one surface of the first plate 111 and 311. The bent support portion 4111a3 is installed on one side of the decorative bracket 73c to support the casing 4111 and enable coupling. For example, the coupling support end 73c-1 may include a seating surface 73c-2 on which the bent support portion 4111a3 is seated. The bent support portion 4111a3 may be supported on the seating surface 73c-2 provided at the coupling support end 73c-1 of the decorative bracket 73c.

The bent support portion 4111a3 may be formed so that its end seated on the seating surface 73c-2 is bent. In this way, a structure can be formed in which one side of the decorative bracket 73c is inserted between one side of the casing 4111 and one surface of the first plate 311. As a result, the strength of the casing 4111 can be reinforced.

In FIG. 15b, the fixing side portion 4111a2 of the casing 4111 may be coupled to a component. The component in FIG. 15b may be a lighting member 74 including a light source 74a. The lighting member 74 may include the light source 74a, a lighting bracket 74b that supports the light source 74a to be coupled to one surface of the insulators 110, 210, and 310, and a bolt plate 74c that couples the lighting bracket 74b to the insulators 110, 210, and 310.

In FIG. 15b, the fixing side portion 4111a2 may extend to the inside of the lighting bracket 74b. The fixing side portion 4111a2 may be inserted between the bolt plate 74c and the first plate 111 and 311. As a result, the fixing side portion 4111a2 is coupled to the inside of the lighting member 74, thereby enabling firm coupling.

The fixing side portion 4111a2 may be arranged to be spaced apart from the block 65 disposed at a side portion of the insulators 110, 210, and 310. By being spaced apart from the block 65, the fixing side portion 4111a2 can reduce thermal bridges. As a result, the flow of cold air through the casing 4111 to the block 65 can be reduced, thereby improving insulation performance.

Optionally, the casing 5111 may be formed of at least two members.

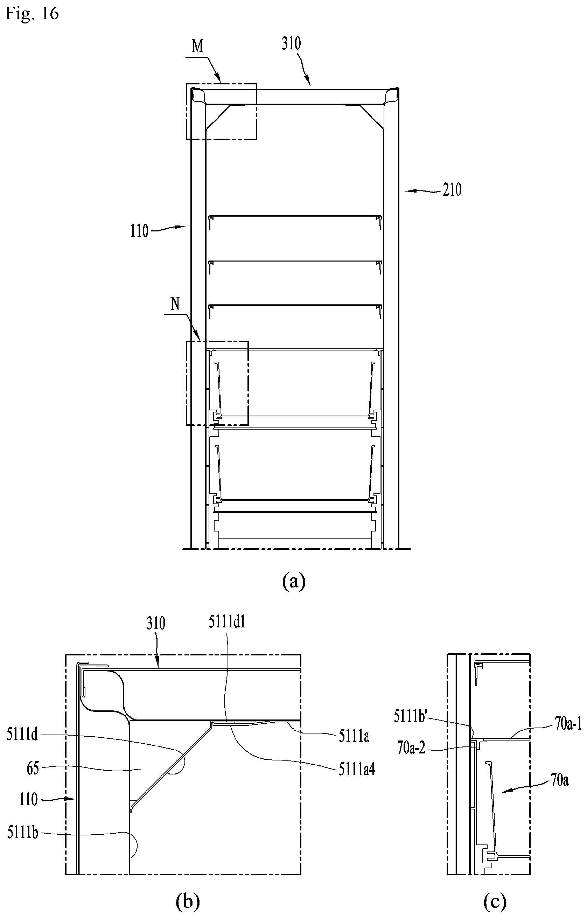

Optionally, as illustrated in FIGS. 16a to 17b, of the casing 5111, the first surface 5111a through the third surface 5111c each may be formed as a separate part.

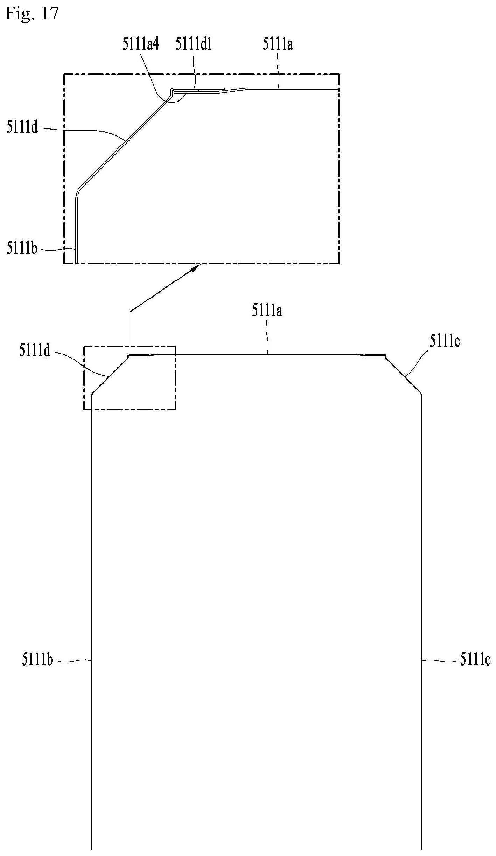

The first surface 5111a of the casing 5111 may include a bent side portion 5111a4 supported on one side of the second surface 5111b, on at least one side. For example, the bent side portion 5111a4 may be seated on and supported by the fixing side portion 5111d1 of the second surface 5111b. In one example, the bent side portion 5111a4 may be bent at a side. FIGS. 16b and 17 illustrate an example in which the fixing side portion 5111d1 of the second surface 5111b is disposed between the first plate 111 and 311 and the bent side portion 5111a4 of the first surface 5111a. That is, a structure is shown in which one side of the second surface 5111b is disposed between one side of the first surface 5111a and the first plate 111 and 311. However, the present disclosure is not necessarily limited thereto, and a structure in which one side of the first surface 5111a is disposed between one side of the second surface 5111b and the first plate 111 and 311 is also possible.

The second surface 5111b may include a block cover 5111d. The block cover 5111d can shield the block 65 to prevent damage caused by external force and moisture penetration. The fixing side portion 5111d1 may be provided on one side of the block cover 5111d.

The third surface 5111c may also be formed as a separate part from the first surface 5111a. The structure of the third surface 5111c may be identical to that of the second surface 5111b. Therefore, the description of the second surface 5111b may apply to the third surface 5111c, and detailed explanation thereof will be omitted.

It has been described that the block cover 5111d and 5111e is provided on the second surface 5111b and/or the third surface 5111c. However, the present disclosure is not necessarily limited thereto, and a structure in which the block cover 5111d is provided on the first surface 5111a may also be possible. This will be described later.

As such, since at least one of the first surface 5111a through the third surface 5111c of the casing 5111 is formed as a separate part, more precise assembly tolerances can be obtained when coupling the casing 5111 to the insulators 110, 210, and 310.

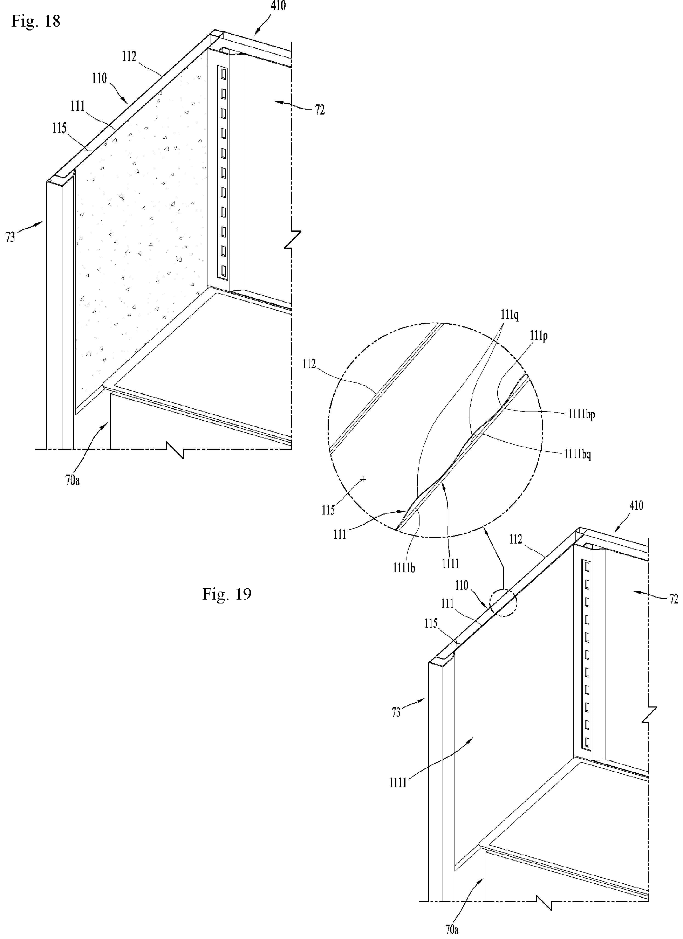

FIG. 18 illustrates an example in which, when the casing 1111 is absent, "irregularities" are shown on an inner surface of the insulator 110.

In the present disclosure, in an air evacuation process in which the vacuum space 115 is formed between the first plate 111 and the second plate 112, so-called "irregularities" appear on one surface or inner surface of the first plate 111 due to vacuum pressure. The "irregularities" refer to a shape in which a concave portion 111q and a convex portion 111p are generated, or in which different heights are present.

In this shape, a joining portion 1111bp may be a portion that is joined to the convex portion 111p, which is a relatively raised portion of the first plate 111, on one surface or outer surface of the casing 1111. A spacing portion 1111bq may be a portion that is spaced apart from the surrounding area of the convex portion 111p of the first plate 111 on one surface or outer surface of the casing 1111.

Optionally, air may be accommodated between the spacing portion 1111bq of the first plate 111 and one surface of the casing 1111. For example, air may be accommodated between the spacing portion 1111bq of the first plate 111 and an inner surface of the casing 1111. As illustrated in FIG. 19, air may be accommodated between the concave portion 111q of the first plate 111 and the spacing portion 1111bq of the casing 1111. An air insulation material may be formed between the first plate 111 and the casing 1111, thereby improving the insulation performance of the insulator 110.

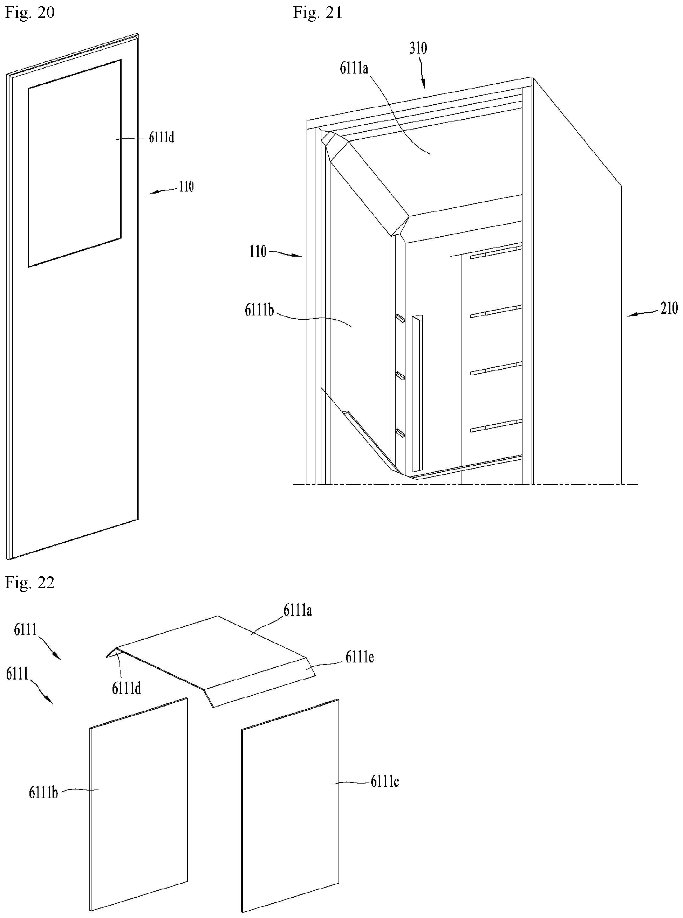

FIGS. 20 to 22 illustrate an example of a casing 6111 formed of three members.

A second surface 6111b and/or a third surface 6111c may be coupled to inner surfaces of the insulators 110 and 210. The two insulators 110 and 210, to which the second surface 6111b and the third surface 6111c are respectively coupled, form one surface (-y direction) of the main body and another surface (+y direction) arranged parallel to and spaced apart from the one surface. Thereafter, after the insulator 310 (+z direction), which forms yet another surface connecting the one surface and the other surface, is coupled, a first surface 6111a of the casing 6111 is coupled to the insulator 310 (+z direction) between the second surface 6111b and the third surface 6111c. A block cover 6111d and 6111e may be provided on both sides of the first surface 6111a.

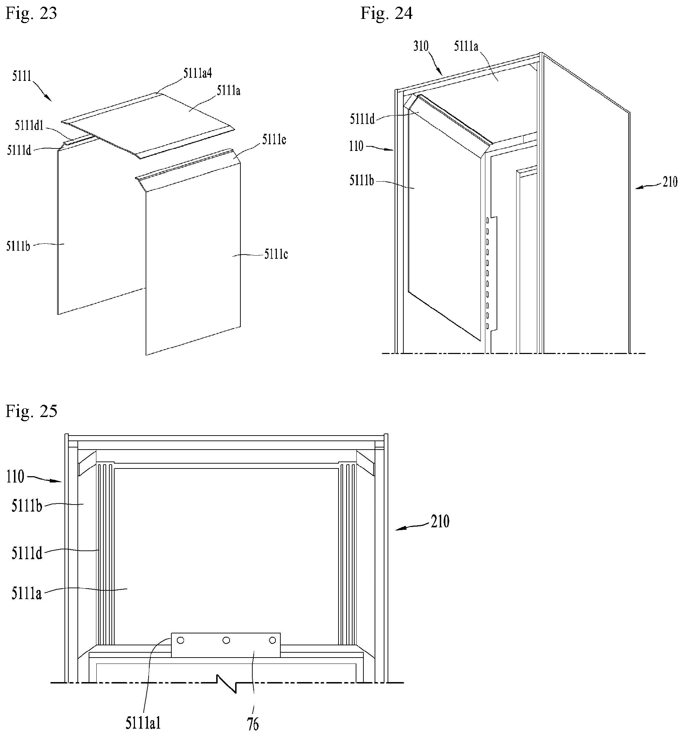

FIGS. 23 to 25 illustrate another example of a casing 5111 formed of three members.

An example is illustrated in which a block cover 5111d is provided not on the first surface 5111a but on each of the second surface 5111b and the third surface 5111c. The block cover 5111d is provided on each of the second surface 5111b and the third surface 5111c. After the insulators 110, 210, and 310 are coupled to form the main body, the second surface 5111b may be coupled to the insulator 110 on one side (-y direction). The third surface 5111c may be coupled to the insulator 210 on the other side (+y direction), arranged parallel to and spaced apart from the one side. Opposite sides of the first surface 5111a may be respectively coupled to one side of the second surface 5111b and one side of the third surface 5111c. The coupling relationship between the first surface 5111a and the second surface 5111b has been described with reference to FIGS. 16b and 17, and redundant explanation will be omitted.

The insulators 110, 210, 310, and 410 described above are not limited to the configurations and methods of the embodiments set forth above. Rather, the embodiments may be selectively combined in whole or in part so that various modifications can be made.

It will be apparent to those skilled in the art that the present disclosure may be embodied in other specific forms without departing from the spirit and essential characteristics of the disclosure. Therefore, the foregoing detailed description should not be construed as limiting in all respects, but rather considered as illustrative. The scope of the disclosure should be determined by the reasonable interpretation of the appended claims, and all modifications within the equivalent scope of the disclosure are included within the scope of the disclosure.

## Claims

1. An insulator comprising:
a first plate;
a second plate;
a vacuum space provided between the first plate and the second plate; and
a casing covering at least a portion of the first plate.

2. The insulator of claim 15, wherein one surface of the first plate includes a convex portion that is deformed by a vacuum pressure forming the vacuum space and formed to be convex toward the casing, and
one surface of the casing includes:
a contact portion contacting the convex portion; and
a spacing portion spaced apart from a surrounding area of the convex portion on the one surface of the first plate.

3. The insulator of claim 2, wherein the spacing portion is filled with air, between the one surface of the first plate and the one surface of the casing.

4. The insulator of claim 15, wherein the casing includes:
a first surface; and
second and third surfaces formed by bending from both sides of the first surface in a direction intersecting the same, and
at least three insulators are provided to be connected together to face the first to third surfaces, respectively.

5. The insulator of claim 4, further comprising:
a block provided on at least one side of the insulator; and
a block cover covering the block and provided at least either between the first surface and the second surface or between the first surface and the third surface.

6. The insulator of claim 4, wherein the first surface includes a bent side portion that is formed by bending from at least one side and supported on one side of the second surface, and the second surface includes a fixing side portion where the bent side portion is seated to be supportable.

7. The insulator of claim 15, wherein at least two insulators are provided to be connected in directions intersecting each other,
further comprising:
a block provided on at least one side of the insulator; and
a block cover covering the block and provided on one side of the casing.

8. The insulator of claim 15, further comprising a component provided on one surface of the insulator, and
wherein the casing is disposed between one surface of the first plate and the component and includes a component connector contacting one side of the component.

9. The insulator of claim 15, further comprising at least one component provided to be supportable on at least one surface of the first plate, and
wherein the casing includes a fixing side portion fixed to the at least one component.

10. The insulator of claim 9, wherein the fixing side portion is fixed to be inserted between the first plate and the at least one component.

11. The insulator of claim 9, wherein the fixing side portion includes:
a first fixing side portion provided on one side and fixed to a first component; and
a second fixing side portion provided on another side spaced apart from the one side and fixed to a second component.

12. The insulator of claim 9, further comprising a block provided on at least one side of the insulator, and
wherein the fixing side portion is disposed such that one side thereof is spaced apart from the block.

13. The insulator of claim 15, wherein the casing is provided with at least two surfaces which are formed as separate parts.

14. The insulator of claim 13, wherein one surface of the casing formed as a separate part is provided to be bent on one side and is seated and supported on one side of another surface.

15. The insulator of claim 1, wherein the casing includes a portion that is at least partially bent and connected to one side of the first plate.
